Europäisches Patentamt

European Patent Office

Office européen des brevets

(11) Veröffentlichungsnummer: **0 443 414 A1**

## (12) EUROPÄISCHE PATENTANMELDUNG

(21) Anmeldenummer: **91101939.6**

(22) Anmeldetag: **12.02.91**

(51) Int. Cl.5: **C08J 5/24**, **B29C 67/14**, **B29B 11/16**

(30) Priorität: **17.02.90 DE 4005156**

(43) Veröffentlichungstag der Anmeldung:
**28.08.91 Patentblatt 91/35**

(84) Benannte Vertragsstaaten:
**AT BE CH DE ES FR GB IT LI NL SE**

(71) Anmelder: **FERROZELL GMBH**
**Theodor-Sachs-Strasse 1**
**W-8900 Augsburg 22(DE)**

(72) Erfinder: **Hitzer, Hannelore, Dr.**
**Breitenbergweg 39**
**W-8901 Deuringen(DE)**
Erfinder: **Menhofer, Peter**
**Kalterer Strasse 24**
**W-8948 Mindelheim(DE)**

(74) Vertreter: **Patentanwaltsbüro Cohausz &**
**Florack**
**Schumannstrasse 97**
**W-4000 Düsseldorf 1(DE)**

(54) **Verfahren zum Herstellen einer harzgetränkten Materialbahn als Prepreg für unter Wärme und Druck zu verpressender Laminate.**

(57) Die Erfindung bezieht sich auf ein Verfahren zum Herstellen einer harzgetränkten Materialbahn für Prepregs, die zu einem ein- oder mehrschichtigen Laminat unter Wärme und Druck verpreßt werden können. Ausgegangen wird von einer porösen Materialbahn, die in einem niedrigviskosen, lösungsmittelfreien oder stark lösungsmittelarmen Harzsystem mit festgelegter Molekulargewichtsverteilung mit Zuschlagstoffen und/oder Beschleunigern und/oder Härtern und/oder Weichmachern und/oder reaktiven Vedünnern getränkt wird. Das Harz wird beim Tränken durch Erwärmung in niedrigviskosem Zustand gehalten. Nach der Tränkung wird die Auftragsmenge mittels erwärmter Dosierwalzen eingestellt. Danach erfolgt die Wärmebehandlung. Diese wird auf Teilaushärtung eingestellt, um so weiter aushärtbare Prepregs herzustellen. Im Gegensatz zu Verfahren unter Verwendung von stark lösungsmittelhaltigem Harz reduziert sich die aufwendige Behandlung der Trockneratmosphäre und das Verfahren läßt sich schneller durchführen.

EP 0 443 414 A1

Die Erfindung bezieht sich auf ein Verfahren zum Herstellen einer harzgetränkten Materialbahn durch Tränken einer porösen Materialbahn in einem niedrigviskosen Harz und anschließender Wärmebehandlung bis zu einer festgelegten Molekulargewichtsverteilung des Harzes und anschließender Kühlung.

Mit einem solchen Verfahren werden zum Beispiel sogenannte Prepregs hergestellt, die unter Wärme und Druck zu ein- oder mehrschichtigen Laminaten verpreßt werden. Bei herkömmlichen Herstellungsverfahren werden die porösen Materialbahnen, beispielsweise Glasfasergewebe, durch einen mit lösungsmittelhaltigen, niedrigviskosem Harz gefüllten Trog geführt. Dabei nehmen die porösen Materialbahnen mehr oder weniger Harz auf. Um die Auftragsmenge einzustellen, durchläuft die Materialbahn einen in seiner Weite einstellbaren Durchtrittsspalt von Dosierwalzen. Danach wird die Materialbahn durch einen Trockner geführt, der beide Seiten der Materialbahn mit Heißluft und/oder Wärmestrahlung beaufschlagt. Die Trocknung wird derart gesteuert, daß das Harz nach der Trocknung nicht mehr klebrig ist, eine vollständige Aushärtung aber noch nicht erfolgt ist. Die Unterbrechung der Aushärtung ist erwünscht, um bei der Weiterverarbeitung der Prepregs zu ein- oder mehrschichtigen Laminaten durch deren Erwärmung das Harz aufschmelzen und damit die verschiedenen Schichten unter vollständiger Aushärtung des Harzes miteinander verbinden zu können.

Ein wesentlicher Nachteil dieses bekannten Verfahrens besteht in der langen Trocknungszeit, da in der ersten Stufe die Lösungsmittel des Harzes verdampft werden müssen und dabei schon Polymerisationsreaktion des Harzes mit der Folge erfolgt, daß das Harz in zu großem Umfang in den sog. B-Zustand übergeht. Dazu ist der für die Trocknung benötigte Energiebedarf sehr hoch und es ist notwendig, die beim Trocknen aus dem Harz ausgetriebenen Lösungsmittel nachzuverbrennen.

Der Erfindung liegt die Aufgabe zugrunde, ein Verfahren der eingangs genannten Art zu entwickeln, das einen geringeren Aufwand als die bekannten Verfahren erforderlich macht und für die Weiterverarbeitung der Prepregs günstige Eigenschaften derselben ergibt.

Diese Aufgabe wird erfindungsgemäß bei einem Verfahren der eingangs genannten Art dadurch gelöst, daß für die Tränkung der Materialbahn ein lösungsmittelfreies oder stark lösungsmittelarmes Harzsystem, d.h. ein Harzsystem mit maximal 10 Gew.-% Lösungsmittelgehalt, mit Zuschlagstoffen, und/oder Weichmachern und/oder Beschleunigern und/oder Härter und/oder reaktiven Verdünnern verwendet wird, das durch Erwärmen in einem für die Tränkung geeignet niedrigviskosen Zustand gehalten wird, daß die Materialbahn nach der Tränkung zwischen einem erwärmten Dosierwalzenpaar geführt wird und daß abschließend die Materialbahn einer Wärmebehandlung durch Strahlung oder Heißluft mit anschließender Kühlung der getränkten und erwärmten Materialbahn unterworfen wird.

Wegen der Verwendung eines lösungsmittelfreien oder stark lösungsmittelarmen Harzsytems ist es zwar erforderlich, das Harz im erwärmten Zustand auf die Materialbahn aufzubringen, doch wird damit eine Reihe von Vorteilen erkauft, die diesen zusätzlichen Aufwand mehr als kompensieren: Die Aushärtung beziehungsweise Teilaushärtung des lösungsmittelfreien oder stark lösungsmittelarmen Harzsystems läßt sich schneller als die eines lösungsmittelhaltigen Harzes durchführen. Bei der Wärmebehandlung werden keine bzw. nur geringe Mengen Lösungsmittel freigesetzt, die abgeführt und nachverbrannt werden müssen. Das bedeutet, daß keine großen, immer wieder zu erneuernden, erwärmten Luftvolumina für die Aufnahme und für das Abführen der Lösungsmittel benötigt werden. Insgesamt führen diese Vorteile zu kleineren Durchlauftrocknern und zu einem erheblich geringerem Energiebedarf.

Aufgrund des Umstandes, daß bei der Verarbeitung erfindungsgemäß keine oder nur geringe Mengen Lösungsmittel verdampft werden müssen und sofort eine Polyreaktion einsetzt, können Prepregs mit diesen Harzsystemen sehr viel schneller hergestellt werden als üblich. In ersten Versuchen wurde gefunden, daß im Ergebnis gleich gute Laminate bei einer fünfmal schnelleren Behandlungszeit als beim Einsatz von lösungsmittelhaltigem Harz erhalten werden.

Mit dem erfindungsgemäßen Verfahren lassen sich teilausgehärtete Prepregs für Laminate erzeugen. Gute Ergebnisse für die Weiterverarbeitung der Prepregs zu Laminaten werden erzielt, wenn die Aushärtung nur so weit vorangetrieben wird, bis eine Restgelzeit bei 170°C von 40 bis 250 Sekunden, im Mittel von 150 Sekunden bei Epoxidharzsystemen, und ein Harzfluß von 0 - 30%, im Mittel von 10 - 14% für Phenolharzsysteme, für Epoxid-/Phenolharzsysteme, für Silikonharzsysteme und Melaminharzsysteme verbleibt. Diese Reaktivität reicht aus, um Prepregs unter Wärme zu ein- oder mehrschichtigen Platten zu verpressen. Zufriedenstellende Ergebnisse werden erzielt, wenn mit einer Behandlungstemperatur von 150 bis 300°C, insbesondere 170 bis 180°C, an den Materialbahnen gearbeitet wird. Die Temperatur des Harzsystems während der Tränkung und die Temperatur des Dosierwalzenpaares sollte zwischen 60 und 120°C, insbesondere bei 90°C, liegen.

Das erfindungsgemäße Verfahren läßt sich auf herkömmlichen Anlagen mit erwärmten Dosierwalzen und erwärmter Lackwanne durchführen.

Die Harzsysteme basieren auf den üblichen duroplastischen Kunstharzen (zum Beispiel Epoxid, Phenol, Melamin, Silikon, Polyester u,a.), die so vorkondensiert werden, daß eine Molekulargewichtsverteilung erreicht wird, deren mittleres Molekulargewicht, gemessen mit analytischer 6PC (Gel-Permeations-Chromatografie) bei 200 - 1500, insbesondere 300 - 750 liegt, so daß sie ohne Zuschlagstoffe, Härter und Beschleuniger bei Raumtemperatur fest bzw. hochviskos sind und eine Lagerfähigkeit von mehreren Wochen bis Monaten besitzen. Bei Zugabe von Zuschlagstoffen und/oder Härtern und/oder Beschleunigern und/oder reaktiven Verdünnern und/oder Weichmachern läßt sich die Viskosität weiter senken.

Bei Mischung der Harzsysteme mit Zuschlagstoffen, Härtern und Beschleunigern und Erwärmen dieser Mischung auf 40 bis 120°C, vorzugsweise 80°C, wird eine Viskosität von 100 bis 500 mPas, vorzugsweise 150 mPas, erreicht. Die Topfzeit dieser Harzsysteme beträgt 1 bis 4 Stunden bei 80°C, so daß eine einwandfreie Verarbeitung gewährleistet ist. Diese Harzsysteme sind auf konventionellen Umluft- und Strahlungstrocknern mit beheizbarer Tränkwanne und beheizbaren Dosierwalzen zu verarbeiten.

Beispiel 1

In 140,0 kg Epoxidharz auf Basis Bisphenol A mit einem Epoxidäquivalentgewicht von 185 werden 100,0 kg Epoxidharz auf Basis Tetrabrombisphenol A mit einem Epoxidäquivalentgewicht von 445 und einem Bromgehalt von 49% bei 85 bis 90°C aufgelöst. Zu dieser Harzschmelze werden 4,6 kg fein pulverisiertes Dicyandiamid sowie 0,15 kg fein pulverisiertes 2-Phenylimidazol zugegeben und homogen eingearbeitet. Dieses Harzsystem hat bei 170°C eine Gelierzeit von 220 Sekunden, die Viskosität bei 90°C beträgt 200 mPa·s. Bei einer Lagertemperatur von 90°C stellt sich nach 2 Stunden eine Viskositätsverdoppelung ein, die Topfzeit beträgt mehr als 3 Stunden.

Dieses Harzsystem wird in eine auf 90°C beheizte Tränkwanne überführt. Ein E-Glasfilamentgewebe mit einem Flächengewicht von 200 g/m² wird durch diese Mischung gezogen und durch ein auf 90°C beheiztes Walzenpaar geführt. Mit dem Walzenspalt wird das Tränkgewicht auf 360 g/m² eingestellt.

Im Anschluß an die Dosierung wird die Materialbahn durch einen Strahlungsofen geführt, dessen Heizfelder auf Temperaturen von 160 bis 210°C aufgeheizt sind. Die Durchzugsgeschwindigkeit wird so eingestellt, daß eine Restgelierzeit von 100 bis 120 Sekunden bei 170°C erreicht wird. Die so hergestellten Prepregs sind bei 20°C mindestens 3 Monate lagerfähig und lassen sich bei 180°C und

einem Druck von 40 bar zu Laminaten verpressen, deren Eigenschaften einem FR 4 nach NEMA L1 und UL 94 VO entsprechen.

Beispiel 2

Ein Phenol/Kresol-Gemisch und Formaldehyd werden mit 15% Diphenylkresylphosphat, berechnet auf das Phenol/Kresol-Gemisch, und Ammoniak als Katalysator im Molverhältnis 1:1,05 gemischt und 20 bis 30 Minuten unter Rückfluß und Vakuum kondensiert. Anschließend wird bis zu einer B-Zeit bei 150°C von 15 bis 20 Minuten unter Vakuum destilliert. Das so erhaltene Harzsystem hat eine Viskosität bei 80°C von 350 bis 500 mPas. Die Topfzeit bei 80°C beträgt 2 Stunden.

Dieses Harzsystem wird in einer auf 80°C beheizte Tränkwanne überführt. Eine Papierbahn von 120 g/m² Flächengewicht wird durch diese Mischung gezogen und anschließend durch ein auf 80°C beheiztes Walzenpaar geführt. Mit dem Walzenspalt wird ein Tränkgewicht von 250 g/m² eingestellt.

Anschließend wird die Materialbahn durch einen Strahlungsofen geführt, dessen Temperaturzonen von 150 bis 200°C eingestellt sind. Die Geschwindigkeit der Materialbahn wird so reguliert, daß ein Harzfluß bei 150°C von 10 bis 12% erreicht wird. Die so erhaltenen Prepregs sind bei 20°C 14 Tage lagerfähig und lassen sich bei 150°C und 50 Kp/cm² spez. Druck zu Platten verpressen.

Die erhaltenen Hartpapiertafeln entsprechen in ihren Eigenschaften einer Qualität Hp 2061 nach DIN 7735.

**Patentansprüche**

1. Verfahren zum Herstellen einer harzgetränkten Materialbahn durch Tränken einer porösen Materialbahn in einem niedrigviskosen Harz und anschließender Wärmebehandlung bis, zu einer festgelegten Molekulargewichtsverteilung des Harzes und abschließender Kühlung, **dadurch gekennzeichnet,** daß die Materialbahn in einem lösungsmittelfreien oder stark lösungsmittelarmen Harzsystem mit einer Molekulargewichtsverteilung, deren mittleres Molekulargewicht bei 200 - 1500, insbesondere bei 300 - 750 liegt, gegebenenfalls mit Zuschlagstoffen und/oder Beschleunigern und/oder Härtern und/oder Weichmachern und/oder reaktivem Verdünner getränkt wird, das durch Erwärmung in einem für die Tränkung geeigneten niedrigviskosen Zustand gehalten wird, daß die Materialbahn nach der Tränkung zwischen einem erwärmten Dosierwalzenpaar geführt wird und daß abschließend die Materialbahn einer thermischen Behandlung unterworfen wird.

2. Verfahren nach Anspruch 1,
   **dadurch gekennzeichnet**, daß bei der thermischen Behandlung keine volle Aushärtung des Harzes erfolgt.

3. Verfahren nach Anspruch 1 oder 2,
   **dadurch gekennzeichnet**, daß ein Harzsystem mit einer Topfzeit von 1 bis 4 Stunden und einer Viskosität von 150 bis 1000 mPas bei 80°C verwendet wird.

4. Verfahren nach einem der Ansprüche 1 bis 3,
   **dadurch gekennzeichnet**, daß die Wärmebehandlung mit einer Temperatur von 150 bis 300°C, insbesondere 170°C, an der Materialbahn erfolgt.

5. Verfahren nach einem der Ansprüche 1 bis 4,
   **dadurch gekennzeichnet**, daß nach der Wärmebehandlung das Harzsystem eine Restgelzeit von 40 bis 250 Sekunden bei 170°C, insbesondere 150 Sekunden bei 170°C, hat.

6. Verfahren nach einem der Ansprüche 1 bis 5,
   **dadurch gekennzeichnet**, daß nach der Wärmebehandlung das Harzsystem einen Harzfluß von 0 bis 30%, insbesondere 10 bis 14%, hat.

**Europäisches Patentamt**

# EUROPÄISCHER RECHERCHENBERICHT

Nummer der Anmeldung

**EP 91 10 1939**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 133 154 (CIBA-GEIGY) <br> * Seite 1, Zeile 1 - Seite 2, Zeile 18 * * Seite 5, Zeile 7 - Seite 6, Zeile 20; Anspruch 1 * <br> — — — | 1-6 | C 08 J 5/24 <br> B 29 C 67/14 <br> B 29 B 11/16 |
| X | AU-A-2 053 27 (MINNESOTA MINING) <br> * Seite 6, Zeile 23 - Seite 7, Zeile 38 * * Seite 9, Zeile 25 - Seite 10, Zeile 34 * * Ansprüche 1-4 * <br> — — — | 1-6 | |
| X | EP-A-0 303 098 (DANUTEC) <br> * das ganze Dokument * <br> — — — | 1-6 | |
| A | DE-A-3 817 800 (STRAMAX) <br> * Spalte 7, Zeile 59 - Spalte 8, Zeile 19 * <br> — — — | 1-6 | |
| A | KUNSTSTOFFE Bd. 79, Nr. 2, Februar 1989, MÜNCHEN Seiten 151 - 156; G. MELCHER: 'Das Druckimprägnierverfahren ' <br> — — — — — | | |

|  |
|---|
| RECHERCHIERTE SACHGEBIETE (Int. Cl.5) |
| B 29 B <br> B 29 C <br> C 08 J |

Der vorliegende Recherchenbericht wurde für alle Patentansprüche erstellt

| Recherchenort | Abschlußdatum der Recherche | Prüfer |
|---|---|---|
| Den Haag | 15 Mai 91 | VAN WALLENE A.M.A. |